# EUROPÄISCHE PATENTSCHRIFT

(11) **EP 0 419 857 B1**
(45) Veröffentlichungstag und Bekanntmachung des Hinweises auf die Patenterteilung: **29.06.1994**
(21) Anmeldenummer: 90116227.1
(22) Anmeldetag: 24.08.1990
(51) Int. Cl.: G05D 9/12, F25B 49/00

(54) **Verfahren zur Überwachung einer Kälteanlage**
Method for monitoring a refrigeration plant
Méthode de la surveillance d'une installation frigorifrique

(30) Priorität: 28.08.1989 DE 3928430
(43) Veröffentlichungstag der Anmeldung: 03.04.1991
(73) Patentinhaber: Linde Aktiengesellschaft, 65189 Wiesbaden (DE)
(72) Erfinder: Gruber, Franz, D-5040 Brühl (DE)
(74) Vertreter: Schaefer, Gerhard, Dr.

(56) Entgegenhaltungen:
- EP-A- 0 217 605
- US-A- 4 856 288

## Beschreibung

Die Erfindung betrifft ein Verfahren zur Überwachung einer Kälteanlage, in welcher ein Kältemittel in einem Kältemittelkreislauf von einem Verdichter verdichtet, in einem Kondensator verflüssigt und in einem Sammler gesammelt wird, von dort in flüssigem Zustand zu Verdampfern und nachfolgend in entspanntem, gasförmigen Zustand zurück zum Verdichter geleitet wird, wobei die Füllmenge des Kältemittels im Sammler gemessen und ein Warnsignal dann abgegeben wird, wenn diese Füllmenge einen vorgegebenen Sollwert um einen vorbestimmten Wert unterschreitet.

Derartige Verbund-Kälteanlagen werden beispielsweise in Supermärkten betrieben. Sie versorgen dort im allgemeinen eine Vielzahl von Kälteverbrauchern, wie etwa Kühlräume, Kühl- und Tiefkühlmöbel. Der Sammler dient als Puffer für die umlaufende Kältemittelmenge.

Um einen zu geringen Kältemittelinhalt und mögliche Kältemittelverluste der Anlage festzustellen, wird bei den bekannten Verfahren die Füllmenge im Sammler während des laufenden Betriebes kontinuierlich kontrolliert und bei einem zu niedrigen Wert eine Warnung ausgegeben. Beispielsweise ist in der DE-OS 25 40 032 ein Flüssigkeitssammler offenbart, der mit einem Schwimmer zur Messung der Höhe des Füllstandes im Sammler ausgestattet ist. Wenn der Füllstand für längere Zeit den zulässigen Mindestwert unterschreitet, wird eine Warnanzeige aktiviert. Diese vorbekannte Kontrollvorrichtung ist offensichtlich während des laufendes Betriebes der Kälteanlage ständig eingeschaltet.

In der DE-PS 1 40 395 wird vorgeschlagen, während des Betriebes einer Kältemaschine ständig das Gewicht der Flüssigkeit im Sammler zu messen und eine Abnahme dieser Meßgröße anzuzeigen.

Die Füllmenge im Sammler ist jedoch sehr starken Schwankungen unterworfen, da sie empfindlich vom momentanen Kältebedarf der einzelnen Kälteverbraucher abhängt. Die einzelnen Verdampfer der Kälteverbraucher sind - je nach augenblicklich benötigtem Kältebedarf - mit mehr oder weniger Kältemittel gefüllt. Die jeweils Überschüssige Menge an Kältemittel wird im Sammler gespeichert. Der momentane Kältebedarf und mit ihm auch die Füllmenge im Sammler schwanken sehr stark mit wechselnden Betriebsbedingungen (beispielsweise offener Tag- und abgedeckter Nachtbetrieb bei gekühlten Verkaufsmöbeln).

Die Füllmenge im Sammler hängt über den Kältebedarf hinaus noch von Temperatur und Druck des Kältemittels ab. Diese Parameter sind ebenfalls starken Schwankungen unterworfen, vor allem dann, wenn wie allgemein üblich, der Kondensator mit Außenluft gekühlt wird, deren Temperatur mit Wetter und Tageszeit variiert. Die bekannte Art der Überwachung des Kältemittelinhaltes einer Kälteanlage ist daher ungenau und unbefriedigend.

Der Kreislauf der Kälteanlage muß soviel Kältemittel enthalten, daß auch bei maximalem Kältebedarf die Verdampfer aller Kälteverbraucher gefüllt werden können. Bei niedrigerem Kältebedarf sind einzelne Verdampfer nur teilweise gefüllt oder sogar vollständig leer. Diese überschüssige Menge von Kältemittel wird vom Sammler aufgefangen.

Die Art der Überwachung des Kältemittelinhalts, die bei den bisher bekannten Verfahren zum Betreiben einer Kälteanlage angewandt wird, erfolgt über Messungen des Füllstandes im Sammler während des laufenden Betriebs und ist häufigen und erheblichen Störungen durch mehrere Parameter unterworfen. Die Überwachung ist daher ungenau und gewährleistet keine befriedigende Sicherheit gegen unerkannte Kältemittelverluste.

Der vorliegenden Erfindung liegt die Aufgabe zugrunde, ein gattungsgemäßes Verfahren im Hinblick auf eine frühzeitige Erkennung von Kältemittelverlusten zu verbessern.

Diese Aufgabe wird dadurch gelöst, daß die Messung der Füllmenge in vorgegebenen, regelmäßigen Zeitabständen durchgeführt wird, daß vor der Messung der Füllmenge zunächst die Kältemittelversorgungsleitung zu den Verdampfern unterbrochen wird, bis sämtliches flüssige Kältemittel in den Verdampfern verdampft ist, und der Saugdruck des Verdichters und/oder der Verflüssigungsdruck des Kältemittles im Kondensator auf einen jeweils vorgegebenen Wert eingeregelt werden und dabei das Kältemittel weiter verdichtet, verflüssigt und dem Sammler zugeleitet wird, damit zu Beginn der Messung stets die gleiche Restmenge an Kältemittel im Verdampfersystem und/oder stets die gleiche Kältemitteldichte im Sammler vorliegen.

Die Überwachung des Kältemittelinhalts findet damit nicht ständig und während des laufenden Betriebes statt, sondern unter fest vorgegebenen und reproduzierbaren Bedingungen. Die Meßgröße kann somit den bei den bekannten Verfahren auftretenden zufälligen Schwankungen weitestgehend entzogen werden. Dazu bleibt der Kältemittelkreislauf solange unterbrochen, bis die Verdampfer sämtlicher Kälteverbraucher leergesaugt sind und praktisch das gesamte in der Kälteanlage enthaltene Kältemittel verflüssigt und in den Sammler eingeführt ist. Dabei wird für jede Messung derselbe Wert für den Saugdruck und/oder den Verflüssigungsdruck eingestellt.

Durch die Saugdruckregelung wird sichergestellt, daß während jeder Messung der gleiche Druck in den Verdampfern der einzelnen Kälteverbraucher herrscht. Die in den Verdampfern und den Rohrleitungen verbliebene Restmenge an gasförmigen Kältemittel ist daher bei jeder Messung die gleiche. Der Saugdruck wird durch die Leistung beim Verdichten eingestellt, speziell durch die Anzahl der laufenden Verdichter und/oder deren Drehzahl.

Somit befindet sich eine genau definierte Restmenge von - ausschließlich gasförmigem - Kältemittel im Verdampfer- und Niederdruck-Leitungssystem. Der übrige Anteil liegt im Sammler nahezu ausschließlich als Flüssigkeit vor.

Die Regelung des Verflüssigungsdrucks kann entweder direkt oder über eine Regelung der Verflüssigungstemperatur vorgenommen werden. Sie gewährleistet bei jeder Messung eine gleichbleibende Dichte des Kältemittels im Sammler und im Hochdruck-Leitungssystem. Dies ist für die Konstanz der Dichte des dampfförmig verbliebenen Anteils des Kältemittels von Bedeutung, welche die meisten Meßmethoden für die Füllmenge im Sammler beeinflußt. Stellgröße ist in der Regel die Leistung beim Verflüssigen, beispielsweise reguliert über Anzahl und Umdrehungsgeschwindigkeit der laufenden Verflüssigerventilatoren.

Die Füllmenge im Sammler stellt unter diesen Bedingungen eine reproduzierbare, von Störgrößen weitgehend unabhängige Meßgröße für die gesamte im Kältemittelkreislauf enthaltene Menge an Kältemittel dar. Mögliche Verluste an Kältemittel können rechtzeitig festgestellt werden. Die Entleerung der Verdampfer und die anschließende Messung des Kältemittelinhaltes werden in einer Zeit erniedrigten Kältebedarfs, vorzugsweise nachts, durchgeführt und periodisch, beispielsweise täglich oder wöchentlich wiederholt.

Besonders günstig ist, wenn bei dem erfindungsgemäßen Verfahren vor der Messung der Füllmenge beide Größen, sowohl der Saugdruck des Verdichters als auch der Verflüssigungsdruck des Kältemittels auf einen jeweils vorgegebenen Wert eingeregelt werden. Damit ist die gesamte gasförmig verbliebene Restmenge an Kältemittel als Störgroße ausgeschaltet, sowohl auf der Niederdruck- als auch auf der Hockdruckseite.

Gemäß einem weiteren Merkmal der Erfindung wird die Messung der Füllmenge entweder gravimetrisch über den hydrostatischen Druck des Kältemittels am Boden des Sammlers oder volumetrisch bei gleichzeitiger Temperaturmessung des Kältemittels im Sammler erfolgt.

Eine vorteilhafte Meßmethode der Füllmenge besteht in der Bestimmung des hydrostatischen Drucks der Kältemittelflüssigkeit am Boden des Sammlers. Diese wird gemäß einer Weiterbildung der Erfindung mittels einer Meßvorrichtung durchgeführt, welche über eine obere und eine untere Kältemittelleitung mit der Oberseite und der Unterseite des Sammlers verbunden ist, wobei die untere Kältemittelleitung beheizt wird.

Über eine derartige Druckmessung kann direkt das Gewicht und damit die Stoffmenge des im Sammler enthaltenen Kältemittels gemessen werden. Es gehen keine weiteren Ungenauigkeiten durch andere zu messende Parameter oder notwendige Umrechnungen ein. Beide Kältemittelleitungen müssen mit gasförmigem Kältemittel gefüllt sein. In den Leitungen anstehendes flüssiges Kältemittel kann das Meßergebnis merklich verfälschen. Durch die Beheizung wird in der unteren Kältemittelleitung anstehende Flüssigkeit verdampft, so daß der hydrostatische Druck in der Leitung praktisch keinen Einfluß auf das Meßergebnis ausübt. Die obere Kältemittelleitung sollte mit Gefälle von der Meßvorrichtung zum Sammler verlegt sein, so daß anfallende Flüssigkeit in den Sammler ablaufen kann.

Weiterhin ist es vorteilhaft, wenn der vorgegebene Sollwert für die Füllmenge des Kältemittels im Sammler bei der Erstinbetriebnahme der Kälteanlage unmittelbar nach deren Einlaufphase ermittelt wird.

Um einen realitätsnahen Sollwert zu erhalten, wird dieser vorzugsweise nach einer gewissen Einlaufzeit der Kälteanlage bestimmt. Bei der wiederholten Überprüfung des Kältemittelinhalts während des laufenden Betriebs wird der ermittelte Wert mit diesem Sollwert verglichen. Weicht der momentane Wert vom Sollwert stark nach unten ab. beispielsweise mehr als 3 oder 6%, so wird eine Warnung ausgegeben.

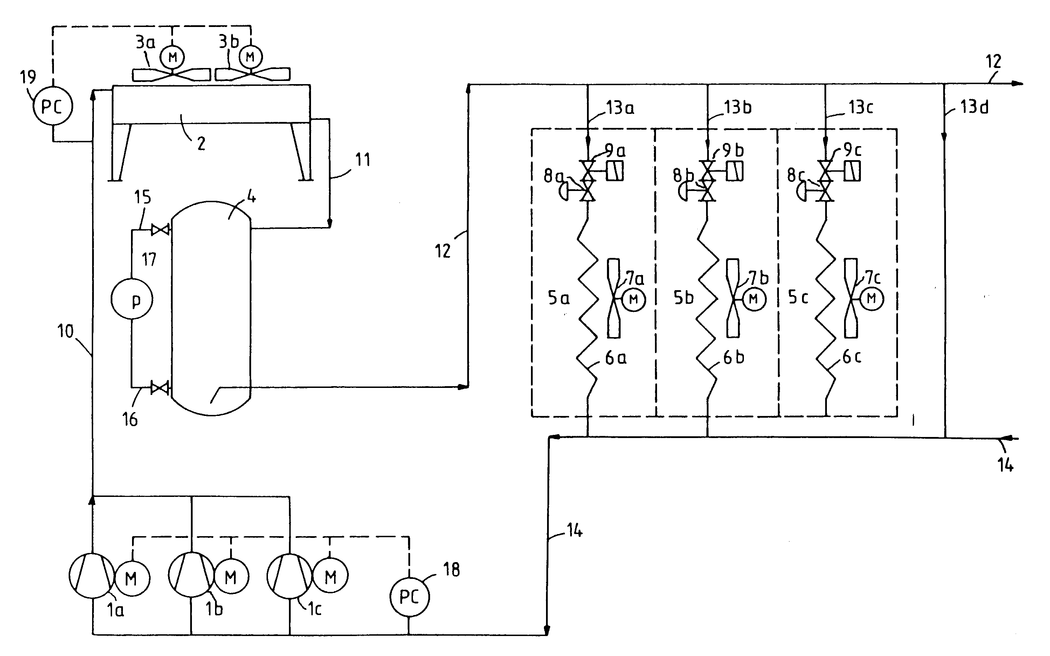

Die Erfindung und nähere Einzelheiten der Erfindung werden im folgenden anhand eines Ausführungsbeispiels, welches in der Zeichnung schematisch dargestellt ist, näher erläutert.

In der Zeichnung ist eine Kälteanlage, welche nach dem erfindungsgemäßen Verfahren betrieben werden kann, schematisch dargestellt. Die Anlage weist speziell drei parallel geschaltete Verdichter 1a, 1b, 1c auf. Die Anzahl der Verdichter kann je nach Verwendung der Kälteanlage auch größer oder kleiner sein. Die Verdichter 1a, 1b, 1c saugen gasförmiges Kältemittel aus einer Saugleitung 14 an und fördern es unter Druck über Leitung 10 zu einem Kondensator 2, in dem es durch indirekten Wärmetausch kondensiert wird. Der Kondensator 2 wird im allgemeinen von Außenluft gekühlt, welche über Verflüssigerventilatoren 3a, 3b herangeführt wird.

Flüssiges Kältemittel aus dem Kondensator 2 wird über Leitung 11 in einen Sammler 4 eingeführt. Über eine Kältemittelversorgungsleitung 12 wird Flüssigkeit aus dem Sammler 4 entnommen und zu Kälteverbrauchern 5a, 5b, 5c weitergeleitet. In der Zeichnung sind drei Kälteverbraucher 5a, 5b, 5c als Beispiel eingezeichnet.

Jeder Kälteverbraucher 5a, 5b, 5c weist eine Kältemittelversorgungsleitung 13a, 13b, 13c auf, die durch ein Magnetventil 9a, 9b, 9c geschlossen werden kann. Bei geöffnetem Magnetventil 9a, 9b, 9c strömt flüssiges, unter Druck stehendes Kältemittel in ein Expansionsventil 8a, 8b, 8c, in welchem es entspannt wird. Das entspannte Kältemittel wird in einem Verdampfer 6a, 6b, 6c, der von durch ein Gebläse 7a, 7b, 7c geförderter Luft umströmt wird, verdampft.

Das gasförmige, unter niedrigem Druck stehende Kältemittel wird wieder in den Kreislauf (Saugleitung 14) zurückgeführt.

Die Verdichter 1a, 1b, 1c werden über eine Saugdruckregelung 18 gesteuert. In ähnlicher Weise werden die Verflüssigerventilatoren 3a, 3b, in Abhängigkeit vom Verflüssigungsdruck geschaltet (Verflüssigerregler 19). In beiden Fällen werden die Anzahl und möglicherweise die Umdrehungsgeschwindigkeit der eingeschalteten Aggregate variiert.

Bei der erfindungsgemäßen Art der Ermittlung des Kältemittelinhalts der Anlage wird folgendermaßen vorgegangen:
In vorgegebenen Zeitabständen, beispielsweise täglich oder wöchentlich, werden die Kältemittelversorgungsleitungen 13a, 13b, 13c sämtlicher Kälteverbraucher 5a, 5b, 5c durch Betätigung der Magnetventile 9a, 9b, 9c geschlossen. Der Kältemittelkreislauf ist damit zwischen Sammler 4 und Kälteverbrauchern 5a, 5b, 5c unterbrochen. Die Verdichter werden weiterhin von der Saugdruckregelung 18 gesteuert. Dabei kann jedoch ein niedrigerer Sollwert für den Saugdruck vorgegeben werden als während des Normalbetriebs. Die Verflüssigerventilatoren 3a, 3b sowie die Gebläse 7a, 7b, 7c der einzelnen Kälteverbraucher 5a, 5b, 5c bleiben ebenfalls in Betrieb.

Auf diese Weise wird das Kältemittel praktisch vollständig aus den Verdampfern 6a, 6b, 6c abgesaugt, verflüssigt und schließlich über Leitung 11 in den Sammler 4 eingeführt. Sobald die Verdampfer vollständig entleert sind, kann mit der Messung der Menge des im Sammler 4 enthaltenen Kältemittels begonnen werden. Der Meßzeitpunkt kann entweder durch eine erfahrungsgemäß ausreichende Wartezeit ab dem Schließen der Magnetventile 9a, 9b, 9c, beispielsweise etwa 10 bis 30 Minuten, festgelegt oder jeweils durch das Erreichen des maximalen Flüssigkeitsstandes im Sammler 4 bestimmt werden.

Am Ende der Absaugphase ist darauf zu achten, daß der Verflüssigungsdruck und/oder die Verflüssigungstemperatur ein konstantes, vorgewähltes Niveau erreichen. Dies ist nicht nur bei volumetrischen Messungen notwendig, bei denen in die Berechnung der Stoffmenge die vom Druck und von der Temperatur abhängige Dichte des Kältemittels eingeht, sondern auch bei direkteren gravimetrischen Messungen, die von Schwankungen der Dampfdichte auf der Druckseite der Kälteanlage gestört werden können. Diese Steuerung ist Hauptaufgabe des Verflüssigerreglers 19, der die Leistung der Verflüssigerventilatoren beeinflußt. Regelgröße ist dabei der Druck beim Verflüssigen, der direkt über die Dampfdruckkurve des Kältemittels mit der Verflüssigungstemperatur korrespondiert.

Mit Außenluft gekühlte Anlagen werden üblicherweise auf eine maximale Außentemperatur von etwa 40°C ausgelegt. Da das Absaugen des Kältemittels im allgemeinen nachts durchgeführt wird, kann zu diesem Zweck ein niedrigeres Temperaturniveau eingestellt werden. In der Regel reicht hier ein Sollwert für die Verflüssigungstemperatur von etwa 25°C aus. Dadurch gewinnt man außerdem den Vorteil, daß kleinere Druckschwankungen und damit verbundene Schwankungen des Gasvolumens sich weniger stark auf den Meßwert für den Kältemittelinhalt auswirken. Die Dichte von gasförmigem Kältemittel ist nämlich bei niedrigen Temperaturen deutlich geringer (bei R22: 0,0441 kg/dm³ bei 25°C gegenüber 0,0659 kg/dm³ bei 40°C).

Nach einer vorgewählten Wartezeit ist die restliche Kältemittelflüssigkeit in den Kälteverbrauchern 5a, 5b, 5c verdampft, von den Verdichtern 1a, 1b, 1c angesaugt und nach Kondensation (2) im Kältemittelsammler 4 gespeichert. Dafür sind erfahrungsgemäß 10 bis 30 Minuten ausreichend. Falls gewünscht, kann der Meßzeitpunkt auch genauer durch Beobachtung der Veränderung des Füllstandes im Sammler 4 bestimmt werden.

Die Messung des Inhaltes des Sammlers 4 kann auf vielfältige Weise erfolgen, beispielsweise durch Messung der Höhe der Flüssigkeitssäule, durch Dehnungsmeßstreifen usw. Besonders vorteilhaft ist jedoch eine direkte gravimetrische Messung, die auf besonders günstige Weise durch eine Bestimmung des hydrostatischen Druckes der Flüssigkeitssäule im Sammler 4 durchgeführt werden kann.

Zu diesem Zweck sind das obere und das untere Ende des Flüssigkeitssammlers 4 über eine obere Kältemittelleitung 15 bzw. eine untere Kältemittelleitung 16 mit einer Meßvorrichtung 17, beispielsweise einem Differenzmanometer, verbunden. Leitung 16 ist vorzugsweise mit einer elektrischen Heizung versehen, die vom Zeitpunkt des Schließens der Magnetventile 9a, 9b, 9c der Kälteverbraucher 5a, 5b, 5c bis zum Abschluß der Messung in Betrieb ist. Dadurch wird sichergestellt, daß das gesamte in Leitung 16 befindliche Kältemittel verdampft ist und keine in der Meßleitung 16 anstehende Flüssigkeit das Meßergebnis verfälschen kann.

Nach Inbetriebnahme der Kälteanlage wird nach einer gewissen Einlaufphase zum ersten Mal die in der Anlage befindliche Menge an Kältemittel auf die erfindungsgemäße Art gemessen, um einen Sollwert für die darauffolgenden, in regelmäßigen Abständen durchgeführten Messungen zu erhalten. Bei den späteren Messungen werden die momentan ermittelten Werte für den Kältemittelinhalt mit dem Sollwert verglichen. Falls eine bedenkliche Differenz von beispielsweise mehr als 3 oder 6% vorliegen sollte, wird eine Warnung ausgelöst. Die maximal tolerierte Differenz kann beispielsweise durch entsprechende Einstellung eines Warnkontaktes am Differenzmanometer 17 vorgewählt werden.

Die Meßvorrichtung 17 kann außerdem für die Überwachung des Flüssigkeitsstandes im Sammler 4 während des normalen Betriebes eingesetzt werden.

## Patentansprüche

1. Verfahren zur Überwachung einer Kälteanlage, in welcher ein Kältemittel in einem Kältemittelkreislauf von einem Verdichter (1a, 1b, 1c) verdichtet, in einem Kondensator (2) verflüssigt und in einem Sammler (4) gesammelt wird, von dort in flüssigem Zustand zu Verdampfern (6a, 6b, 6c) und nachfolgend in entspanntem, gasförmigen Zustand zurück zum Verdichter (1a, 1b, 1c) geleitet wird, wobei die Füllmenge des Kältemittels im Sammler (4) gemessen und ein Warnsignal dann abgegeben wird, wenn diese Füllmenge einen vorgegebenen Sollwert um einen vorbestimmten Wert unterschreitet, dadurch gekennzeichnet, daß die Messung der Füllmenge in vorgegebenen, regelmäßigen Zeitabständen durchgeführt wird, daß vor der Messung der Füllmenge zunächst die Kältemittelversorgungsleitung (12; 13a, 13b, 13c) zu den Verdampfern (6a, 6b, 6c) unterbrochen wird, bis sämtliches flüssige Kältemittel in den Verdampfern (6a, 6b, 6c) verdampft ist, und der Saugdruck des Verdichters (1a, 1b, 1c) und/oder der Verflüssigungsdruck des Kältemittels im Kondensator (2) auf einen jeweils vorgegebenen Wert eingeregelt werden und dabei das Kältemittel weiter verdichtet (1a,1b,1c), verflüssigt (2) und dem Sammler (4) zugeleitet wird, damit zu Beginn der Messung stets die gleiche Restmenge an Kältemittel im Verdampfersystem und/oder stets die gleiche Kältemitteldichte im Sammler (4) vorliegen.

2. Verfahren nach Anspruch 1, dadurch gekennzeichnet, daß vor der Messung der Füllmenge sowohl der Saugdruck des Verdichters (1a, 1b, 1c) als auch der Verflüssigungsdruck des Kältemittels im Kondensator (2) auf einen jeweils vorgegebenen Wert eingeregelt werden.

3. Verfahren nach Anspruch 1 oder 2, dadurch gekennzeichnet, daß die Messung der Füllmenge entweder gravimetrisch über den hydrostatischen Druck des Kältemittels am Boden des Sammlers (4) oder volumetrisch bei gleichzeitiger Temperaturmessung des Kältemittels im Sammler (4) erfolgt.

4. Verfahren nach Anspruch 3, dadurch gekennzeichnet, daß zur Messung des hydrostatischen Drucks des Kältemittels am Boden des Sammlers (4) die Oberseite und die Unterseite des Sammlers (4) mit der zugeordneten Meßvorrichtung (17) über eine obere und eine untere Kältemittelleitung (15; 16) verbunden sind und daß die untere Kältemittelleitung (16) beheizt wird.

5. Verfahren nach einem der Ansprüche 1 bis 4, dadurch gekennzeichnet, daß der vorgegebene Sollwert bei der Erstinbetriebnahme der Kälteanlage unmittelbar nach deren Einlaufphase ermittelt wird.

## Claims

1. Method for monitoring a refrigerating installation in which a refrigerant in a refrigerant circuit is compressed by a compressor (1a, 1b, 1c), liquefied in a condenser (2) and collected in a collector (4), passed from there in a liquid state to evaporators (6a, 6b, 6c) and then in an expanded gaseous state back to the compressor (1a, 1b, 1c), whereby the quantity of refrigerant in the collector (4) is measured and a warning signal is given when this quantity drops below a pre-determined set value by a pre-established amount, characterised in that the quantity is measured at predetermined regular intervals of time, in that before the quantity is measured, the refrigerant supply line (12; 13a, 13b, 13c) to the evaporators (6a, 6b, 6c) is cut until all the liquid refrigerant in the evaporators (6a, 6b, 6c) has evaporated, and the suction pressure of the compressor (1a, 1b, 1c) and/or the liquefaction pressure of the refrigerant in the condenser (2) are each regulated to a pre-determined value during which the refrigerant is further compressed (1a, 1b, 1c), liquefied (2) and passed to the collector (4) so that the same residual quantity of refrigerant is always present in the evaporator system and/or the same density of refrigerant is always present in the collector (4) at the start of measurement.

2. Method according to claim 1, characterised in that before the quantity is measured, both the suction pressure of the compressor (1a, 1b, 1c) and the liquefaction pressure of the refrigerant in the condenser (2) are regulated to a pre-determined value.

3. Method according to claim 1 or 2, characterised in that the quantity is measured either gravimetrically by means of the hydrostatic pressure of the refrigerant at the bottom of the collector (4) or volumetrically while simultaneously measuring the temperature of the refrigerant in the collector (4).

4. Method according to claim 3, characterised in that for measurement of the hydrostatic pressure of the refrigerant at the bottom of the collector (4) the top and the bottom of the collector (4) are connected to the associated measuring device (17) through an upper and a lower refrigerant line (15; 16) and in that the lower refrigerant line (16) is heated.

5. Method according to one of claims 1 to 4, characterised in that the pre-determined set value is established at the time of first operation of the refrigerating installation immediately after its running-in phase.

## Revendications

1. Procédé de surveillance d'une installation de réfrigération, dans laquelle un fluide réfrigérant est comprimé dans un circuit de réfrigération par un compresseur (1a, 1b, 1c), est liquéfié dans un condenseur (2) et est collecté dans un collecteur 4, et de là est conduit à l'état liquide à des évaporateurs (6a, 6b, 6c) et ensuite ramené à l'état gazeux détendu aux compresseurs (1a, 1b, 1c), la quantité de remplissage de fluide réfrigérant étant mesuré dans le collecteur (4) et un signal étant ensuite émis lorsque cette quantité totale dépasse une valeur de consigne pré-déterminée d'une valeur pré-déterminée, caractérisé en ce que l'on réalise la mesure de la quantité de remplissage à des périodes de temps régulières pré-déterminées, en ce qu'avant la mesure de la quantité de remplissage, on ferme d'abord la conduite d'alimentation en fluide réfrigérant (12; 13a, 13b, 13c) vers les évaporateurs (6a, 6b, 6c) jusqu'à ce que la totalité du fluide réfrigérant liquide présent dans les évaporateurs (6a, 6b, 6c) soit évaporée et en ce que l'on règle la pression d'aspiration du compresseur (1a, 1b, 1c) et/ou la pression de liquéfaction du fluide réfrigérant dans le condenseur (2) à une valeur correspondante pré-déterminée et l'on comprime à nouveau le fluide réfrigérant (1a, 1b, 1c), on le liquéfie (2) et on le ramène au collecteur (2) afin qu'au début de la mesure, soit toujours présente la même quantité restante de fluide réfrigérant dans le système d'évaporateur et/ou toujours la même masse volumiqrne de fluide réfrigérant dans le collecteur 4.

2. Procédé selon la revendication 1, caractérisé en ce qu'avant la mesure de la quantité totale, on règle aussi bien la pression d'aspiration du compresseur (1a, 1b, 1c) et également la pression de liquéfaction du fluide réfrigérant dans le condenseur (2) à une valeur correspondante pré-déterminée.

3. Procédé selon la revendication 1 ou 2, caractérisé en ce que l'on réalise la mesure de la quantité de remplissage soit par un moyen gravimétrique, par la pression hydrostatique du fluide réfrigérant sur le fond du collecteur (4) ou par un moyen volumétrique en mesurant également la température du fluide réfrigérant dans le collecteur (4).

4. Procédé selon la revendication 3, caractérisé en ce que pour mesurer la pression hydrostatique du fluide réfrigérant sur le fond du collecteur (4), on relie la partie supérieure et la partie inférieure du collecteur (4) avec les dispositifs de mesure associés (17) par une conduite de fluide réfrigérant supérieure et une conduite de fluide réfrigérant inférieure (15; 16) et l'on chauffe la conduite de fluide réfrigérant inférieure (16).

5. Procédé selon l'une des revendications 1 à 4, caractérisé en ce que l'on détermine la valeur de consigne prédéterminée au cours de la première mise en service de l'installation de réfrigération, directement après la phase de démarrage de cette installation.
